Europäisches Patentamt

European Patent Office

Office européen des brevets

(19)

(11) **EP 0 838 139 B1**

(12) **EUROPEAN PATENT SPECIFICATION**

(45) Date of publication and mention
of the grant of the patent:
**20.08.2003 Bulletin 2003/34**

(51) Int Cl.⁷: **A01B 79/00**, A01B 63/00

(21) Application number: **97203203.1**

(22) Date of filing: **14.10.1997**

(54) **Improvements in or relating to tillage**

Verbessertes Kultivationsverfahren

Procédé de cultivation amélioré

(84) Designated Contracting States:
**DE FR GB IT**

(30) Priority: **23.10.1996 GB 9622087**
**12.03.1997 GB 9705132**

(43) Date of publication of application:
**29.04.1998 Bulletin 1998/18**

(73) Proprietor: **CNH U.K. LIMITED**
**Basildon, Essex SS14 3AD (GB)**

(72) Inventors:
• **Scarlett, Andrew J.**
**Cliford, Shefford, Beds. SG17 5EY (GB)**
• **Lowe, John C.**
**Bedford, MK45 3QU (GB)**

(74) Representative: **Vandenbroucke, Alberic**
**CNH Belgium N.V.**
**Patent Department**
**Leon Claeysstraat, 3A**
**8210 Zedelgem (BE)**

(56) References cited:
WO-A-82/01354          GB-A- 2 250 107
US-A- 5 479 992

• JAUFMANN, A; TEWES, G.:
"Regelungskonzepte für ein
Traktormanagementsystem" LANDTECHNIK,
vol. 50, no. 2, 1995, pages 76-77, XP002123234

**Description**

This invention concerns to improvements in or relating to tillage. In particular, the invention relates to a method and apparatus for controlling a width adjustable tillage implement such as a plough operatively combined with a powered vehicle such as a tractor or other multipurpose agricultural vehicle.

Conventionally a plough is secured to the three point hitch at the rear of a tractor. An operator of the tractor may use controls in the tractor cab to set the ploughing depth of the implement. This results in raising or lowering of the members of the three point hitch until the desired ploughing depth is obtained. Most ploughs are invertible by means of actuators also conventionally controlled from within the tractor cab. Inversion of a plough at the end of a first pass along a field ensures that the furrows ploughed during the next succeeding pass (during which the tractor travels in a direction opposite its direction during the first pass) face in the same direction as those ploughed during the first pass.

The width of many ploughs is adjustable, by means of powered actuators mounted on the plough that are, conventionally, controllable from within the tractor cab. When a plough is adjusted to a wide setting the width of tillage increases correspondingly. Thus the workrate of the tractor/plough combination is potentially increased commensurately if the tractor maintains a constant forward speed. However, increasing the plough width increases the draught experienced by the tractor, ie. the force needed to pull the plough through the soil. This tends to increase the tractor's fuel consumption rate at a given speed, because of a need to fuel the tractor engine at a higher rate; or because of a need to shift the transmission to a lower ratio; or both. In the alternative, the tractor may be driven at a lower speed to try to maintain a constant fuel consumption rate, but then the workrate improvement from the wider plough setting may be offset. There may in any event be an increase in fuel consumption, through running of the tractor engine at an inefficient speed.

Any attempt to achieve compromise settings for the plough width, ploughing depth and engine governor that give rise to acceptable work rates without increasing the tractor's fuel consumption rate excessively are virtually impossible for a tractor operator alone to achieve in practice. This is primarily because the strength of soil (ie. its resistance to cultivation) varies over typically a range of eg. 30kNm$^{-2}$ to 60kNm$^{-2}$ from place to place in a field. The tractor operator is often unable to prevent wheel slip, over revving of the tractor engine or stalling of the engine when the plough encounters sudden changes in the soil strength.

GB-A-96.22.087.6 discloses an automatic control apparatus and a control method for operating a tractor/implement combination in order to maintain a constant ploughing depth whilst simultaneously optimising a performance parameter of the vehicle/implement combination. Typical such performance parameters include the workrate of the vehicle/implement combination; and the fuel consumption rate of the vehicle.

The present invention provides a method and apparatus suitable for use in conjunction with the method of GB-A-96.22.087.6 and suitable for use in conjunction with other vehicle/implement automatic and semi-automatic control arrangements.

According to a first aspect of the invention, there is provided a method of controlling a width adjustable tillage implement operatively combined with a powered vehicle, the method comprising:

i. tilling with the implement for a first period;
ii. obtaining a plurality of measured values of the strength of the soil tilled during the first period;
iii. at the end of the first period, analysing the measured soil strength values and selecting a first soil strength value characteristic of the soil strength values encountered during the first period; and
iv. adjusting the width of the implement, in dependence on the first soil strength value, to a width for use during a subsequent tilling period.

This method advantageously provides a width adjustment technique suitable for use with the apparatus of GB-A-96.22.087.6. The method of the invention also advantageously makes use of the headland turn of a tractor/implement combination for determining and, as necessary, adjusting the plough width setting for a subsequent pass along a field.

Preferably during the subsequent period, tilling occurs in generally the same direction as in the first tilling period. Thus, the method of the invention may be used to determine at the end of a first pass an optimal width setting for a subsequent pass along the field in the same direction. This is advantageous because (i) the strength of a given area of soil encountered by a plough may differ depending on the direction of approach of the plough; and also, of course, because (ii) many fields are inclined and hence give rise to different loadings on the vehicle/implement combination, depending on its direction of travel. Thus it is desirable that the method of the invention includes the sub-step of storing of an optimal value of the width setting determined from the average soil strength, until the vehicle/implement combination next tills in the same general direction.

Conveniently the method includes:

v. tilling with the implement for a second period;
vi. obtaining a plurality of measured values of the strength of the soil tilled during the second period;
vii. at the end of the second period, analysing the measured soil strength values and selecting a second characteristic soil strength value characteristic of the soil strength values encountered during the second period; and
viii. adjusting the width of the implement, in dependence on the second characteristic soil strength value, to a width for use during a further, subsequent tilling period.

Thus the method permits optimisation of the implement width, in dependence of average soil strength values, for a plurality of directions of travel in a field. Most fields are generally rectangular, so the number of different tilling directions to be accommodated in this way is usually limited to two (ie. representing passes in opposite directions along a field).

Therefore, in preferred forms of the invention, in the further, subsequent period tilling occurs in generally the same direction as in the second period; and tilling in the first period occurs in generally the opposition direction to that of tilling in the second period. Nonetheless, it may be desirable to allow for more than two directions of travel during tilling.

The method preferably includes:

ix. inverting the tilling implement between consecutive tilling periods; and encoding of the measured soil strength values in dependence on the orientation of the tilling implement. This provides an advantageously simple method of ensuring that each width adjustment of the implement is determined from soil strength values detected during a previous pass along the field in the same direction.

Conveniently the or each step of obtaining a plurality of measured soil strength values includes:

xi. periodically measuring a variable of the vehicle/implement combination, the variable being proportional to the draft between the implement and the vehicle. This is particularly advantageous when the method is employed in a vehicle/implement combination including control apparatus as disclosed in GB-A-96.22.087.6. An advantageous frequency for measuring of the said variable of the vehicle/implement combination has been found to be equal to or greater than 4Hz.

Preferably the measured values of the variable are converted to values of soil strength and stored in a memory means as a histogram. Thus the inventive method is suitable for implementation by a microprocessor that may be installed in the vehicle. Preferably the soil strength values are rounded to the nearest $5kNm^{-2}$. This confers acceptable accuracy on the method without requiring lengthy processing times when the method of the invention is implemented by a microprocessor or other computing device.

Conveniently the measured variable is or includes a static draught measurement. In particular, the measured value of the variable may be converted to a soil strength value using the formula:

$$D = (C1 + C2.gs^2) .d.w.n.$$

in which :

$D =$ draught (kN)
$C1 =$ soil strength ($kN/m^2$)
$C2 =$ dynamic draught coefficient ($[kN/m^2] /[km/h]^2$)
$gs =$ ground speed of the vehicle/implement combination (km/h)
$d =$ working depth of implement (m)
$w =$ width of implement (m)
$n =$ number of furrows

The dynamic draft coefficient C2 may be derived from the measured draft value and the ground speed (gs) value.

The method of the invention may incorporate capturing data from a plurality of sensors located on or in the vehicle/implement combination in order to permit use of the above-identified formula.

Conveniently the method includes tilling for one or more further tilling periods in which tilling occurs in directions generally parallel to that of the first and second periods, the number of periods of tilling being equivalent to the tilling of a predetermined area of land, the method including the step of mapping and storing in a memory the soil strength values occurring over the predetermined area.

This advantageously permits subsequent analysis and/or manipulation of the soil strength data, for example in order to generate for a farmer a plot showing areas of a field requiring extra cultivation or the application of specialised chemicals in order to aid subsequent cultivation.

The following definitions of optimal features of the invention relate to aspects thereof particularly suitable for when the method is practised using the apparatus, or in conjunction with the method, of GB-A-96.22.087.6.

When, as is usually the case, the tilling depth of the implement is adjustable, the method may optionally include:

xii. adjusting one or more performance parameters of the vehicle during tilling, whereby to permit maintenance of a constant value of the tilling depth and to optimise a performance characteristic of the vehicle/implement combination. Preferably the one or more performance parameters are selected from workrate or fuel consumption.

Conveniently the step of adjusting the width of the implement in dependence on the average soil strength value includes the sub-steps of:

xiii. measuring the value of the performance characteristic of the vehicle/implement combination;

comparing the said measured value and a steady state reference model of the performance characteristic; and

adjusting the implement width so as to minimise any difference between the said performance characteristic and the steady state reference model.

This aspect of the method may include the further sub-steps:

xiv. adjusting the implement width to a value predicted to minimize the difference between the measured value and the steady state reference model;

xv. further tilling with the implement and measuring a further value of the said performance characteristic;

xvi. comparing the further performance characteristic value and the steady state reference model;

xvii. if necessary, further adjusting the implement width to minimise the difference between the performance characteristic and the steady state reference model;

and as necessary

xviii. repeating steps xiv. to xvii. further to minimise the said difference; and, optionally,

xviii. detecting one or more characteristics of the tilth; and

xix. modifying the steady state reference model in dependence on the said detected tilth characteristics.

For the avoidance of doubt, a "steady state" reference model is herein taken to mean a reference model in which the physical characteristics of the tractor/implement assembly are regarded as fixed with respect to any particular instant in time. Thus, for example, parameters such as the mass of the vehicle and the moments of inertia of various subcomponents thereof are taken to be constant, even though such parameters will in reality vary during operation of the tractor.

The method normally includes the steps of automatically adjusting the implement width to a value expected to be an optimal value for the prevailing values of the measured draft and for the prevailing setting of a variable performance parameter of the vehicle/implement combination.

Under some circumstances the width of the implement may instead be adjusted to a predetermined value chosen by an operator of the vehicle/implement combination. A further, optional feature of the method may then include:

xx. comparing a first performance characteristic of the vehicle/implement combination, when the implement width is adjusted to the predetermined value, against a further performance characteristic of the vehicle/implement combination when the implement width is adjusted to a value expected to be optimal for the prevailing values of the measured draft and for the prevailing settings of one or more variable performance parameters of the vehicle/implement combination and, if the difference between the first and further performance characteristics exceeds a predetermined maximum;

xxi. transmitting a warning signal to an operator of the vehicle/implement combination.

Thus if the setting selected by an operator of the vehicle/implement combination is too far removed from an optimal width setting that would normally be achieved under prevailing conditions by use of the method, the vehicle operator can be warned.

In preferred embodiments, the tilling of the method is or includes ploughing, although other forms of tilling such as harrowing or operating a rotary cultivator are theoretically within the scope of the method of the invention.

Conveniently the first and second characteristic soil strength values, for example, may be obtained by identifying the most frequently occurring soil strength value from a range of possible values during a said period of tilling. This step may advantageously employ storing of a histogram of soil strength values in eg. a microprocessor. When two soil strength values are encountered with equal frequency during a tilling period, the method may include the step of selecting the larger of the values as the characteristic soil strength value.

According to a second aspect of the invention, there is provided a method of controlling a width-adjustable tillage implement operatively combined with a powered vehicle, the method comprising:

i. tilling with the implement in a first direction for a first period;

ii. obtaining a plurality of measured values of the strength of soil tilled during the first period;

iii. subsequently tilling with the implement in a second direction for a second period;

iv. subsequently adjusting the width of the implement in dependence on a first soil strength value characteristic of the soil strength values obtained during the first period;

v. subsequently tilling, for a further period, in the first direction.

This method may advantageously be used with many of the optional, preferred features of the first aspect of the invention defined herein.

Alternatively, the step of selecting the characteristic soil strength value may include averaging of the soil strength values encountered during a said tilling period.

According to a third aspect of the invention, there is provided an apparatus for controlling the width of a width-adjustable tillage implement operatively combined with a powered vehicle, the apparatus comprising one or more actuators for adjusting the width of the implement; one or more sensors for detecting the strength of soil previously tilled by the implement; and a processor for controlling the or each actuator in dependence on the detected soil strength values, wherein the processor stores detected soil strength values during a period of tilling and at the end of said period averages the stored values to obtain an average soil strength value, the processor subsequently controlling the or each actuator to adjust the width of the implement in dependence on the average soil strength value.

Such an apparatus is advantageously suited for practising of the method of the invention.

In preferred embodiments the processor includes means for ensuring that such width adjustment of the implement occurs before subsequent tilling in generally the same direction as the direction of tilling during the first tilling period. Such means may for example include one or more means for receiving and recognising sensor signals indicative of the orientation of an invertible plough, the orientation of which is uniquely associated with a chosen direction of travel of the vehicle/ plough combination.

Preferably the processor includes a memory for storing a histogram of soil strength values and means for comparing the most frequently occurring soil strength value against said histogram whereby to obtain the average soil strength value associated with the period of tilling.

Alternatively, the apparatus may include means for averaging the soil strength values encountered during a said tilling period.

Conveniently the apparatus may include one or more sensors for:

> detecting the width adjustment of the tillage implement and generating a width signal indicative thereof; and/or
> detecting the depth setting of the tillage implement and generating a depth signal indicative thereof, said signals being input to the processor.

Preferably the implement is invertible and the apparatus includes one or more sensors for generating an orientation signal indicative of the orientation of the implement, the orientation signal being input to the processor. The processor may advantageously receive the width and depth signals in analogue form and the orientation signal in digital form.

In preferred embodiments, the processor may include an interface for communicating with a CAN for controlling the actuators adjusting the or each performance parameter of the vehicle/implement combination; and/or maintaining a constant depth setting of the implement.

An arrangement in accordance with the present invention will now be described in greater detail, by way of example, with reference to the accompanying drawings, in which :

> Figure 1 is a schematic representation of a tractor/ implement combination according to the invention;
> Figure 2 is a flow chart showing the steps of the method of the invention; and
> Figure 3 is a block diagram representation of a control apparatus, incorporated in the Figure 1 apparatus, for implementing the method of Figure 2.

Referring to the drawings, there is shown an agricultural tractor denoted by the reference numeral 10. In common with such vehicles in general, tractor 10 has front 11 and rear 12 pairs of driven wheels. Tractor 10 also has an engine (not shown in the drawings) , a transmission system including a gearbox, transfer box and appropriate differentials for the driven wheels; an operator cab 13 and a three point hitch 15 at the rear of the vehicle between the rear wheels for attachment of an adjustable implement, which in the embodiment shown is a plough 60. The ploughing width of reversible plough 60 shown is adjustable.

Thus the tractor/implement combination 10 may be regarded as comprising a plurality of controllable sub-systems, each of which influences the performance of the tractor in dependence on the prevailing conditions. The sub-systems include the engine (adjustable in one of two ways, ie. by means of a throttle setting or by means of an engine governor setting, depending on the engine type); the transmission (adjustable by virtue of selection of gear ratios); the three point hitch 15; and the plough 60 adjustable in a manner described below by adjustment of one or more actuators. Tractor/implement combination 10 includes a plurality of slave controllers for the sub-systems, in the form of microprocessors 41, 42, 43 and 48.

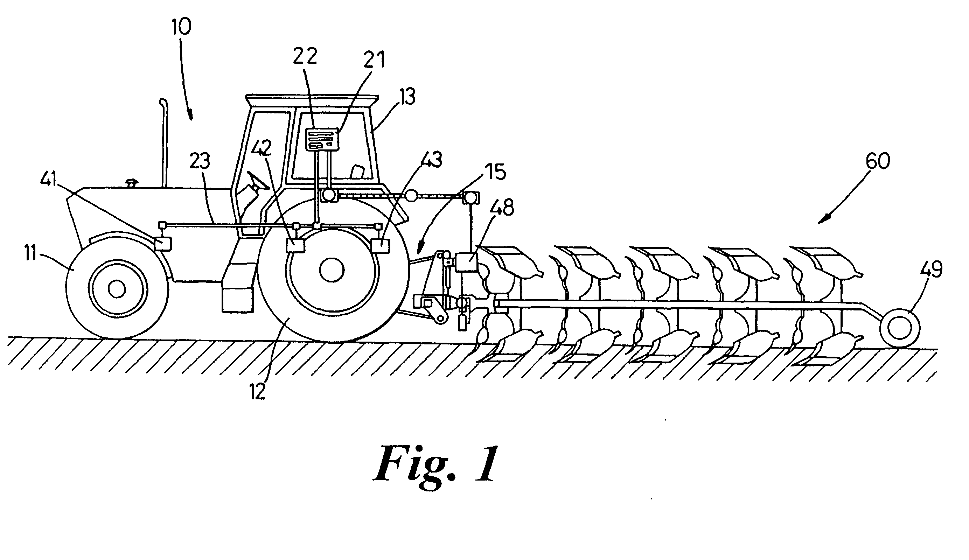

Certain parameters of the engine performance are controlled by means of an engine management system including microprocessor 41 that optimises engine performance in dependence on the throttle or engine governor settings input either by the tractor operator using suitable control members, or from a programmable controller constituted as a further microprocessor 21 (described in greater detail in GB-A-96.22.087.6) located in the cab of the Figure 1 vehicle. The engine management system operates by adjusting various parameters, such as the metering volume of a fuel injection system, the timing of the fuel injection system, the boost pressure of a turbocharger (if present), the opening of engine valves and the opening of portions of the vehicle exhaust system, via suitable powered actuators such as solenoids.

Tractor 10 includes a semi-automatic transmission system in which the transmission ratio selected is determined by a slave controller in the form of microprocessor 42 acting on one or more solenoids to engage and disengage gear sets of the gear box and/or gears of the transfer box, in dependence on the settings of a plurality of gear levers in the operator's cab or in dependence on signals from microprocessor 21.

The Figure 1 embodiment includes hitch microprocessor 43 and plough control microprocessor 48. Microprocessor (slave controller) 43 controls the positions of the elements of the implement (three point) hitch 15. Again, the microprocessor 43 controls a number of actuators such as solenoids in dependence on the settings of control levers in the operator's cab 13, on signals received from microprocessor 21, or in dependence on its own programming.

Microprocessor 48 is operatively connected to actuators, eg. hydraulic actuators, for adjusting the width of the plough and for reversing the plough at the end of each furrow and operates in dependence on signals received from microprocessor 21; from lever settings in cab 13; or according to its own programming.

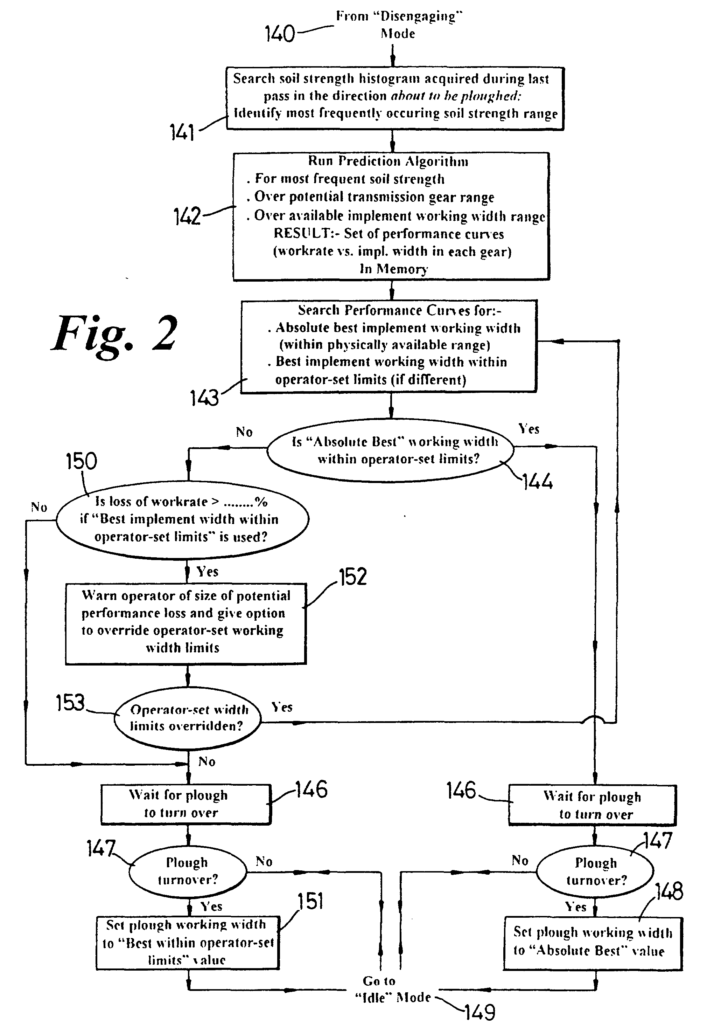

Plough 60 is a fully-mounted, reversible plough 60. By "fully mounted" is meant an implement the depth of which is adjusted by the tractor implement hitch, and not by actuators on the implement itself. (The latter class of implement is generally referred to as a "semi-mounted" implement.) Thus the Figure 2 implement is fully mounted notwithstanding the presence of a stabiliser wheel 49. However the ploughing depth may in alternative embodiments also be adjusted by virtue eg. of support wheels and/or remote actuators.

A further embodiment of the invention, not shown in the drawings, may be similar to the Figure 1 embodiment except that the implement hitch has attached thereto a semi-mounted plough. Numerous other implements may equally well be secured to either the front or the rear of the tractor.

Microprocessor 21 in the embodiment shown lies within the cab 13 and is operatively connected to an operator interface/control unit 22. Preferably, although not essentially, microprocessor 21 includes in its NVM or a removable memory module a steady-state reference model of the operation of the tractor/implement combination when carrying out a variety of tasks under a variety of different field conditions. The reference model can be updated through use of the tractor/implement combination, in order to take account of contemporaneously prevailing field conditions such as soil strength and tractive efficiency. Thus the reference model may include some data that varies each time the vehicle is used; and some data, such as the mass of the vehicle hardware (i.e. those components whose masses do not alter during use of the tractor), the transmission ratios, the engine output at given engine speeds and torque loads, and so on, that are fixed.

A communication bus 23 interconnects the microprocessor 21 and the microprocessors 41, 42, 43 and 48 associated with the adjustable sub-systems.

Thus in the embodiment shown the controller 21 is able to control each of the microprocessors controlling the adjustable sub-systems. Microprocessor 21 may be regarded as hierarchically the primary microprocessor of the vehicle shown. However it is theoretically possible for the reference model and the control algorithms present in microprocessor 21 to be distributed among a number of microprocessors. In such an arrangement a specific, primary processor 21 may be dispensed with. The invention is considered to include such embodiments.

The mode of control may be adjusted, as desired. For example, the microprocessor 21 may include stored therein a control algorithm that seeks to optimise the workrate of the tractor 10 when carrying out a chosen task. Another algorithm representing another control mode may seek to minimise the specific or actual fuel consumption of the tractor.

A further algorithm may be selected to return control of at least some of the tractor sub-systems to the operator, who may then use the conventional cab-mounted levers and controls of the vehicle. Such a mode is necessary e.g. when the tractor 10 is driven on roads between field operations; and when turning in the headland at the end of a field, where it is thought that automatic control of the entire tractor/plough combination would offer no benefits. When such a mode is selected, the microprocessor 21 ceases to influence the microprocessors 41, 42, 43 and 48 until an automatic control mode is again engaged, but the microprocessors 41, 42, 43 and 48 may remain active throughout this period in order to provide independently controllable sub-systems. The control of the microprocessor 48 during turning in the headland is described hereinbelow.

The various modes of operation need not be stored in any of the microprocessors. Indeed, there may be some benefit in providing the software for the various control modes in removable memory devices such as diskettes, so that a tractor user can purchase only the software that is of use to him. Similarly, modified versions of the reference model may be supplied in removable memory devices so that the control apparatus may be tailored to a farmer's individual requirements.

Referring now to Figure 2, there is shown a flow diagram representative of the headland mode subroutine that is operated by microprocessors 43 and 48 when microprocessor 21 relinquishes control of them to permit turning of the tractor 10 in the headland.

In the Figure 2 method during tilling operations the control software constantly calculates the implement draught in kN, by the formula:

$$D = (C1 + C2.gs^2) \, .d.w.n \qquad (1)$$

in which:

D = draught (kN)
C1 = static draught coefficient (kN/m$^2$) or soil

strength

C2 = dynamic draught coefficient ($[kN/m^2] / [km/h]^2$)

gs = ground speed (km/h)

d = working depth (m)

w = furrow width (m)

n = no. of furrows

C2 is derivable from C1, that in turn is available from sensor measurements. In preferred embodiments of the invention, the transmission ratio, engine speed and (optionally) the implement settings are adjustable to take account of variations in the draught value D in order eg. to optimise workrate, minimise fuel consumption or otherwise control the performance of the vehicle/implement combination.

In the presently most preferred embodiment, in which the implement is a plough, the control software will maintain the plough depth constant throughout the ploughing operation. Thus adjustment of the implement is limited to width adjustments only although (as is explained in more detail below) the software is such as not to permit width adjustments to occur while the plough tills the soil. This feature ensures that the resulting furrows do not vary in width from one end to the other.

As is apparent from block 140, the headland mode subroutine is called from a "disengaging mode" subroutine programmed into microprocessor 21, that controls the vehicle/implement combination while the plough rises from the soil at the end of a pass along the field. The disengaging mode subroutine returns control of the engine governor to the vehicle operator while turning occurs.

At block 141, the headland mode subroutine searches a soil strength histogram acquired during the previous pass in the direction about to be ploughed, and identifies the most frequently occurring soil strength range. This is achieved through analysis of the recorded soil strength values. The soil strength values are in the preferred embodiment stored as a histogram in microprocessor 21. If two soil strength values occur with equal frequency, the software identifies the higher of the two as the "most frequently occurring" value, to ensure that the draught of the plough remains within acceptable limits.

Alternatively, microprocessor 21 may at block 141 simply generate an average soil strength value from the recorded values, instead of identifying the most frequently occurring value. Nonetheless, for economy the latter term is used herein to cover either method of identifying a soil strength value characteristic of the previous pass along the field.

Subsequently (block 142) the software runs a prediction algorithm in respect of the most frequently encountered soil strength over the potential transmission gear range and over the available implement working width range. This results in a set of performance curves (workrate versus implement width in each gear) that is stored in the memory of the CPU.

At block 143, these performance curves are searched for the absolute best implement working width (ie. over the entire range of adjustment of implement working widths); and the best implement working width within (optional) operator-set limits (if they differ from the broad range referred to hereinabove).

A determination is then made (block 144) whether the absolute best working width lies within the operator-set limits. If the result of this determination is affirmative, or if the tractor operator has not specified his preferred plough width, at block 146 the software simply waits for the plough to turn over, tests whether this has occurred (block 147), sets the plough working width to "absolute best" value (block 148) (through operation of one or more adjustment actuators mounted on plough 60) and (block 149) reverts to an idle mode preparatory to running of subroutines (described in GB-A-96.22.087.6) for engaging the plough with the soil for tilling; and for controlling the operation of the tractor/plough combination during ploughing.

If the determination, of whether the absolute best working width is within the operator-set limits, is negative, the software then calculates whether the loss of workrate, resulting from failure to use the "absolute best" working width, is greater than a predetermined percentage (step 150). If the result of this determination is negative, the software waits for the plough to turn over, checks for plough turn over, sets the plough width to the best within operator-set limits value and reverts to the idle mode (blocks 146, 147, 151 and 149).

If on the other hand the loss of work rate determined at step 150 is excessive, a warning indication is made (eg. via the operator display 22 in the preferred embodiment) to the operator (block 152) that the potential performance loss is great. The operator is then given the option of overriding the operator-set working width limits in order to optimise workrates. The override may take the form of re-specifying the operator-set working width, or of allowing the software to calculate and implement an "absolute best" optimal width.

If (block 153) the operator overrides the previous operator-set width, step 143 and following are repeated. If this results in an acceptable absolute best working width calculation, the subroutine reverts to idle mode preparatory to running of the engaging and operational subroutines mentioned above.

If the operator chooses not to override the previous operator-set limits at block 153, the software waits for the plough to turn over (block 146), checks for plough turnover (block 147); sets the plough working width to the best available working width within the range of operator-set limits (block 151) and reverts to idle mode preparatory to engagement of engaging and then engaged modes.

The steps of Figure 2 are repeated each time the tractor/plough combination completes a pass along the field. The characteristic soil strength value obtained each time is derived from the histogram of soil strength values recorded during the last pass in the same direction as that about to be ploughed.

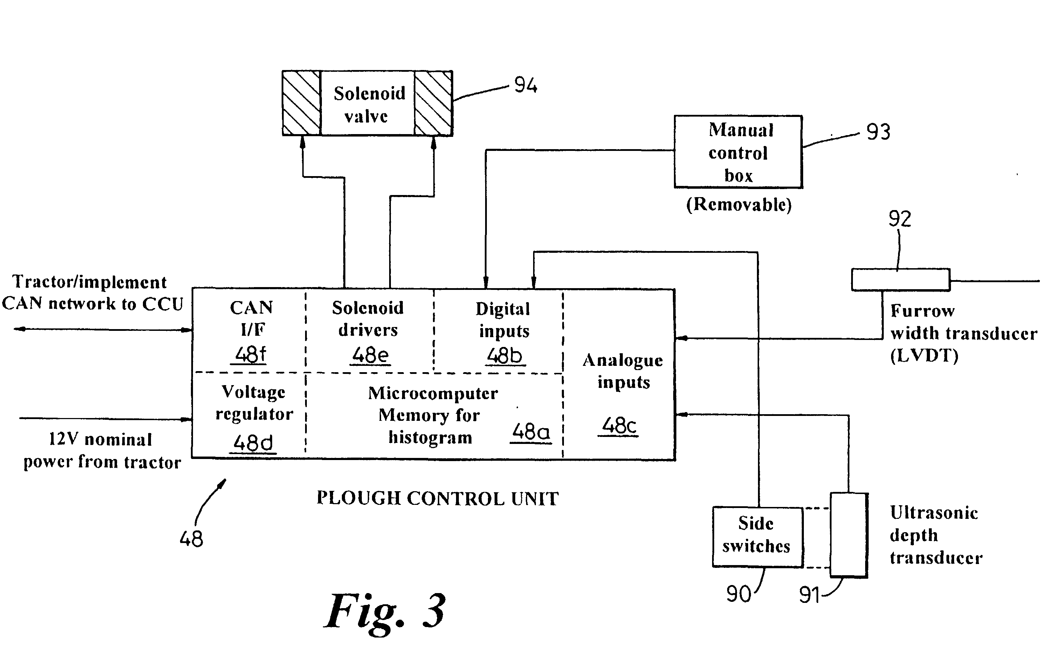

The bits of data corresponding to the respective directions of travel of the tractor/plough combination would of course be encoded in dependence on the orientation of the plough, since the plough is inverted by the control software each time the tractor changes direction. The plough may include a sensor 90 (Figure 3) generating encoding signals indicative of its orientation.

During passes along the field, the software acquires data on the soil strength by measuring the draught experienced between the tractor and the plough, preferably at a sampling rate of equal to or greater than 4 Hz. This sampling rate has been found to provide adequate reaction times for the apparatus of the invention when eg. sudden changes in soil strength are encountered.

In addition to their function of providing a steady state model for setting of the implement width, a plurality of histograms of soil strength may also be stored in memory in, for example, microprocessor 48 or microprocessor 21, or in a removable memory device in order to provide a map of soil strength values in a field. The stored map may be appropriately electronically labelled to identify it to a particular field, and may be used by a farmer in subsequent operations on the field such as harrowing, furrow pressing and even the application of specialised chemicals in order to take account of variations in the soil strength in order to produce a more consistent crop.

Referring now to Figure 3, the relationship between microprocessor 48 and the remainder of the components of Figure 1 is shown in more detail. Microprocessor 48 comprises a central processor or microcomputer 48a, having a digital input interface 48b and an analogue input interface 48c. Microprocessor 48a receives power via a voltage regulator 48d from the 12 volt power supply of the tractor. Microprocessor 48a can output signals via a solenoid driver 48e. There is also an input/output interface 48f with the controller area network (CAN) of the tractor/plough combination. The primary component of the CAN is microprocessor 21.

The digital interface 48b receives signals, including signals indicative of the orientation of plough 60 from a signal generator in the form of a pair of microswitches, indicated by reference numeral 90, that generate signals uniquely identifying the orientation of plough 60. The microswitches are physically secured to an ultrasonic depth sensor 91 that generates analogue signals (input via the analogue interface 48c to microprocessor 48a) indicative of the depth of ploughing. Thus the depth sensor provides feedback data on the ploughing depth for comparison against the set point ploughing depth calculated by microprocessor 21 during ploughing operations.

During ploughing, the draught values (that are proportional to the soil strength) are recorded in microprocessor 21, and encoded by microprocessor 48a using data from the microswitches 90 indicative of the orientation of plough 60.

Further feedback of the operation of plough 60 during ploughing operations is accomplished by a furrow width transducer 92 that provides feedback data on the actual width ploughed, for comparison against the set point plough width determined by microprocessor 21.

Figure 3 includes an optional, manual control box 93 that may be used eg. for adjusting the width setting of plough 60 in the absence of signals from the CAN.

Finally, the solenoid driver 48e of controller 48 is operatively connected to a solenoid valve indicated schematically by reference number 94 for adjusting the width setting of the plough 60. Solenoid valve 94 is shown schematically, since in practice the actual width adjustment arrangement may take a variety of different forms, and may be constituted as a plurality of actuators.

The sensor that provides data on the draught experienced during ploughing may be located on the three point hitch 15, or on a member of the plough 60 secured to three point hitch 15. Other locations for this sensor are also possible.

In use of the apparatus and method of the invention, the plough width and ploughing depth are maintained constant by microprocessor 21 (in accordance with the principles described in GB-A-96.22.087.6), and parameters of the tractor are varied eg. in order to maximise work rate or to minimise fuel consumption. If during ploughing the soil strength should increase, the microprocessor 21 responds by temporarily boosting the engine power output (if possible) and/or selecting a lower transmission ratio. Conversely, a reduction in soil strength would cause the microprocessor 21 to shift the transmission to a higher gear. At the headland turn after completion of a pass along the field, the furrow width is adjusted in accordance with the Figure 2 method by microprocessors 21 and 48 after reversing (inversion) of the plough. The plough is adjusted to a furrow width that according to the determination made in microprocessor 21 at step 143 is most likely to provide an optimal work rate during the return pass down the field. This particular value is, as explained above, preferably determined by logging soil strength values during the previous pass along the field in the same direction, analysing their distribution, and selecting the most frequently occurring value.

**Claims**

1. A method of controlling a width-adjustable tillage implement (60) operatively combined with a powered vehicle (10), the method comprising the step of :

   i. tilling with the implement (60) for a first period; and

**characterized in that** the method further comprises the steps of :

ii. obtaining a plurality of measured values of the strength of the soil tilled during the first period;

iii. at the end of the first period, analysing the measured soil strength values and selecting a first characteristic soil strength value characteristic of the soil strength values encountered during the first period; and

iv. adjusting the width of the implement (60), in dependence on the first characteristic soil strength value, to a width for use during a subsequent tilling period.

2. A method according to Claim 1 **characterized in that** during the subsequent period, tilling occurs in generally the same direction as in the first tilling period.

3. A method according to Claim 1 or Claim 2 further comprising the steps of :

v. tilling with the implement (60) for a second period;

vi. obtaining a plurality of measured values of the strength of the soil tilled during the second period;

vii. at the end of the second period, analysing the measured soil strength values and selecting a second characteristic soil strength value characteristic of the soil strength values encountered during the second period; and

viii. adjusting the width of the implement (60), in dependence on the second characteristic soil strength value, to a width for use in a further, subsequent tilling period.

4. A method according to Claim 3 **characterized in that** in the further, subsequent period, tilling occurs in generally the same direction as in the second tilling period.

5. A method according to Claim 3 or Claim 4 **characterized in that** tilling in the first period occurs in generally the opposite direction to that of tilling in the second period.

6. A method of controlling a width-adjustable tillage implement (60) operatively combined with a powered vehicle (10), the method comprising the step of :

i. tilling with the implement in a first direction for a first period; and

**characterized in that** the method further comprises the steps of :

ii. obtaining a plurality of measured values of the strength of soil tilled during the first period;

iii. subsequently tilling with the implement in a second direction for a second period;

iv. subsequently adjusting the width of the implement in dependence on a first soil strength value characteristic of the soil strength values obtained during the first period;

v. subsequently tilling, for a further period, in the first direction.

7. A method according to Claim 5 or Claim 6 **characterized in that** the method further includes the steps of

ix. inverting the tilling implement (60) between consecutive periods; and

x. encoding the measured soil strength values in dependence on the orientation of the tilling implement (60).

8. A method according to any of the preceding claim **characterized in that** the or each step of obtaining a plurality of measured soil strength values includes

xi. periodically measuring a variable of the vehicle/implement combination, the variable being proportional to the draught between the implement (60) and the vehicle (10).

9. A method according to Claim 8 **characterized in that** the frequency of measurement is equal to or greater than 4 Hz.

10. A method according to Claim 8 or Claim 9 **characterized in that** the measured values of the variable are converted to values of soil strength and stored in a memory means (48a) as a histogram.

11. A method according to Claim 10 **characterized in that** the soil strength values are rounded to the nearest 5 kNm$^{-2}$.

12. A method according to Claim 10 or Claim 11 **characterized in that** the measured variable includes a static draught measurement.

13. A method according to Claim 12 **characterized in that** the measured value of the variable is converted using the formula :

$$D = (C1 + C2.gs^2) .d.w.n.$$

in which :

D =   draught (kN)
C1 =   soil strength (kN/m$^2$)
C2 =   dynamic draught coefficient ([kN/m$^2$]/[km/

h]$^2$)

gs = ground speed of the vehicle/implement combination (km/h)

d = working depth of implement (m)

w = width of implement (m)

n = number of furrows

**14.** A method according to any of the preceding claims including tilling for one or more further tilling periods in which tilling occurs in directions generally parallel to that of the first and second periods, the number of periods of tilling being equivalent to the tilling of a predetermined area of land, **characterized in that** the method further includes the step of mapping and storing in a memory the soil strength values occurring over the predetermined area.

**15.** A method according to any of the preceding claim **characterized in that** the tilling depth of the implement (60) is adjustable, the method including the further step of :

> xii. adjusting one or more performance parameters of the vehicle during tilling, whereby to permit maintenance of a constant value of the tilling depth and to optimise a performance characteristic of the vehicle/implement combination.

**16.** A method according to Claim 13 and any claim appended thereto **characterized in that** the one or more performance parameters are selected from a vehicle transmission ratio or a vehicle power supply speed.

**17.** A method according to any of the preceding claims **characterized in that** the vehicle/implement performance characteristic is selected from work rate or fuel consumption.

**18.** A method according to any of the Claims 15 to 17 **characterized in that** the step of adjusting the width of the implement (60) in dependence on the average soil strength value includes the sub-steps of:

> xiii. measuring the value of the performance characteristic of the vehicle/implement combination;
>
> comparing the said measured value and a steady state reference model of the performance characteristic; and
>
> adjusting the implement width so as to minimise any difference between the said performance characteristic and the steady state reference model.

**19.** A method according to Claim 18 **characterized in that** the sub-step of adjusting the implement width includes the further sub-steps of :

> xiv. adjusting the implement width to a value predicted to minimize the difference between the measured value and the stead-state reference model;
>
> xv. further tilling with the implement and measuring a further value of the said performance characteristic;
>
> xvi. comparing the further performance characteristic value and the steady state reference model;
>
> xvii. if necessary, further adjusting the implement width to minimise the difference between the performance characteristic and the steady state reference model;
>
> and as necessary
>
> xviii. repeating steps xiv. to xvii. further to minimise the said difference.

**20.** A method according to Claim 19 including the further sub-steps of :

> xix. detecting one or more characteristics of the tilth and
>
> xx. modifying the steady state reference model in dependence on the said detected tilth characteristics.

**21.** A method according to any of Claims 15 to 20 **characterized in that** the implement width is automatically adjusted to a value expected to be an optimal value for the prevailing values of the measured draft and for the prevailing setting of a variable performance parameter of the vehicle/implement combination.

**22.** A method according to Claim 21 **characterized in that** when the implement width is adjusted to a predetermined value chosen by an operator of the vehicle/implement combination, the method is modified by inclusion of the steps :

> xxi. comparing a first performance characteristic of the vehicle/implement combination when the implement width is adjusted to the predetermined value against a further performance characteristic of the vehicle/implement combination when the implement width is adjusted to a value expected to be optimal for the prevailing values of the measured draught and for the prevailing settings of one or more variable performance parameters of the vehicle/implement combination and, if the difference between the first and further performance characteristics exceeds a predetermined maximum;
>
> xxii. transmitting a warning signal to an operator of the vehicle/implement combination.

23. A method according to any of the preceding claims **characterized in that** the step i. of tilling with the implement includes ploughing.

24. A method according to any of the preceding claims **characterized in that** the first and/or second characteristic soil strength values are obtained by identifying the most frequently occurring soil strength value from a range of values encountered during a said period of tilling.

25. A method according to Claim 24 **characterized in that**, when two different soil strength values are encountered with equal frequency during a said period, the step of selecting a characteristic soil strength value includes selecting the larger of the two said values.

26. A method according to any of the Claims 1 to 23, **characterized in that** the step of selecting a characteristic soil strength value includes the sub-steps of averaging the soil strength values encountered during a said tilling period; and using the resulting average soil strength value as the characteristic soil strength value.

27. Apparatus for controlling the width of a width-adjustable tillage implement (60) operatively combined with a powered vehicle (10), the apparatus comprising :

   - one or more actuators for adjusting the width of the implement (60);
   - one or more sensors for detecting the strength of soil previously tilled by the implement;
   - and a processor (48) for controlling the or each actuator in dependence on the detected soil strength values; and

      **characterized in that** the processor (48) stores detected soil strength values during a period of tilling and at the end of said period analyses the stored values to obtain a characteristic soil strength value characteristic of the soil strength values encountered during the said period of tilling, the processor subsequently controlling the or each actuator to adjust the width of the implement (60) in dependence on the characteristic soil strength value.

28. Apparatus according to Claim 27 **characterized in that** the processor (48) includes means for ensuring that such width adjustment of the implement occurs before subsequent tilling in generally the same direction as the direction of tilling during the first tilling period.

29. Apparatus according to Claim 27 or Claim 28 **characterized in that** the processor (48) includes a memory (48a) for storing a histogram of soil strength values and means for comparing the most frequently occurring soil strength value against said histogram whereby to obtain the average soil strength value associated with the period of tilling.

30. Apparatus according to Claim 29 **characterized in that** the apparatus includes means for averaging the soil strength values encountered during a said tilling period.

31. A tillage apparatus according to any of Claims 27 to 30 **characterized in that** the apparatus includes one or more sensors for :

   - detecting the width adjustment of the tillage implement and generating a width signal indicative thereof; and/or
   - detecting the depth setting of the tillage implement and generating a depth signal indicative thereof, said signals being input to the processor (48).

32. An apparatus according to Claim 31 **characterized in that** the tillage implement (60) is invertible and the apparatus includes one or more sensors (90) for generating an orientation signal indicative of the orientation of the implement (60), the orientation signal being input to the processor (48).

33. An apparatus according to Claim 31 and 32 **characterized in that** the processor (48) receives the width and depth signals in analogue form and the orientation signal in digital form.

34. An apparatus according to any of the Claims 27 to 33 **characterized in that** the processor includes an interface (48f) for communicating with a CAN for controlling the actuators adjusting the or each performance parameter of the vehicle/implement combination; and/or maintaining a constant depth setting of the implement.

**Patentansprüche**

1. Verfahren zum Steuern eines in seiner Breite einstellbaren Bodenbearbeitungs-/Arbeitsgerätes (60), das betriebsmäßig mit einem kraftbetriebenen Fahrzeug (10) kombiniert ist, wobei das Verfahren den Schritt des:

      i. Bearbeitens des Bodens mit dem Arbeitsgerät (60) für eine erste Periode umfasst;
      **dadurch gekennzeichnet, dass** das Verfahren weiterhin die folgenden Schritte umfasst:

ii. Gewinnen einer Vielzahl von gemessenen Werten der Festigkeit des Bodens, der während der ersten Periode bearbeitet wird;

iii. am Ende der ersten Periode, Analysieren der gemessenen Bodenfestigkeitswerte und Auswählen eines ersten charakteristischen Bodenfestigkeitswertes, der charakteristisch für die Bodenfestigkeitswerte ist, die während der ersten Periode aufgetreten sind; und

iv. Einstellen der Breite des Arbeitsgerätes (60) in Abhängigkeit von dem ersten charakteristischen Bodenfestigkeitswert auf eine Breite zur Verwendung während einer nachfolgenden Bodenbearbeitungsperiode.

2. Verfahren nach Anspruch 1, **dadurch gekennzeichnet, dass** während der nachfolgenden Periode die Bodenbearbeitung allgemein in der gleichen Richtung wie in der ersten Bodenbearbeitungsperiode erfolgt.

3. Verfahren nach Anspruch 1 oder Anspruch 2, das weiterhin die folgenden Schritte umfasst:

v. Bearbeitung des Bodens mit dem Arbeitsgerät (60) über eine zweite Periode;

vi. Gewinnen einer Vielzahl von gemessenen Werten der Festigkeit des Bodens, der während der zweiten Periode bearbeitet wird;

vii. am Ende der zweiten Periode, Analysieren der gemessenen Bodenfestigkeitswerte und Auswählen eines zweiten charakteristischen Bodenfestigkeitswertes, der charakteristisch für die Bodenfestigkeitswerte ist, die während der zweiten Periode aufgetreten sind; und

viii. Einstellen der Breite des Arbeitsgerätes (60) in Abhängigkeit von dem zweiten charakteristischen Bodenfestigkeitswert auf eine Breite zur Verwendung in einer weiteren nachfolgenden Bodenbearbeitungsperiode.

4. Verfahren nach Anspruch 3, **dadurch gekennzeichnet, dass** in der weiteren nachfolgenden Periode die Bodenbearbeitung in allgemein der gleichen Richtung wie in der zweiten Bodenbearbeitungsperiode erfolgt.

5. Verfahren nach Anspruch 3 oder 4, **dadurch gekennzeichnet, dass** die Bodenbearbeitung in der ersten Periode in allgemein der entgegengesetzten Richtung zu der der Bodenbearbeitung in der zweiten Periode erfolgt.

6. Verfahren zur Steuerung eines in seiner Breite einstellbaren Bodenbearbeitungs-Arbeitsgerätes (60), das betriebsmäßig mit einem kraftbetriebenen Fahrzeug (10) kombiniert ist, wobei das Verfahren den Schritt der:

i. Bearbeitung des Bodens mit dem Arbeitsgerät in einer ersten Richtung für eine erste Periode umfasst; und

**dadurch gekennzeichnet, dass** das Verfahren weiterhin die folgenden Schritte umfasst:

ii. Gewinnen einer Vielzahl von gemessenen Werten der Festigkeit des Bodens, der während der ersten Periode bearbeitet wird;

iii. nachfolgende Bodenbearbeitung mit dem Arbeitsgerät in einer zweiten Richtung für eine zweite Periode;

iv. nachfolgendes Einstellen der Breite des Arbeitsgerätes in Abhängigkeit von einem ersten Bodenfestigkeitswert, der charakteristisch für die Bodenfestigkeitswerte ist, die während der ersten Periode gewonnen wurden;

v. nachfolgende Bodenbearbeitung, über eine weitere Periode, in der ersten Richtung.

7. Verfahren nach Anspruch 5 oder 6, **dadurch gekennzeichnet, dass** das Verfahren weiterhin die Schritte der:

ix. Umkehrung des Bodenbearbeitungs-Arbeitsgerätes (60) zwischen aufeinanderfolgender Perioden; und

x. Codierung der gemessenen Bodenfestigkeitswerte in Abhängigkeit von der Ausrichtung des Bodenbearbeitungs-Arbeitsgerätes (60) einschließt.

8. Verfahren nach einem der vorhergehenden Ansprüche, **dadurch gekennzeichnet, dass** der oder jeder Schritt der Gewinnung einer Vielzahl von gemessenen Bodenfestigkeitswerten:

xi. die periodische Messung einer Variablen der Fahrzeug-/Arbeitsgeräte-Kombination einschließt, wobei die Variable proportional zur Zugkraft zwischen dem Arbeitsgerät (60) und dem Fahrzeug (10) ist.

9. Verfahren nach Anspruch 8, **dadurch gekennzeichnet, dass** die Messfrequenz gleich oder größer als 4 Hz ist.

10. Verfahren nach Anspruch 8 oder 9, **dadurch gekennzeichnet, dass** die gemessenen Werte der Variablen in Werte der Bodenfestigkeit umgewandelt und in einer Speichereinrichtung (48a) als ein Histogramm gespeichert werden.

11. Verfahren nach Anspruch 10, **dadurch gekennzeichnet, dass** die Bodenfestigkeitswerte auf die nächsten 5 $kNm^{-2}$ abgerundet werden.

**12.** Verfahren nach Anspruch 10 oder Anspruch 11, **dadurch gekennzeichnet, dass** die gemessene Variable eine statische Zugkraftmessung einschließt.

**13.** Verfahren nach Anspruch 12, **dadurch gekennzeichnet, dass** der gemessene Wert der Variablen unter Verwendung der folgenden Gleichung umgewandelt wird:

$$D = (C1 + C2 \cdot gs^2) \cdot d \cdot w \cdot n,$$

worin

D = Zugkraft (kN)
C1 = Bodenfestigkeit (kN/m$^2$)
C2 = dynamischer Zugkraftkoeffizient ([kN/m$^2$] / [km/h]$^2$)
gs = Fahrgeschwindigkeit der Fahrzeug-Arbeitsgeräte-Kombination (km/h)
d = Arbeitstiefe des Arbeitsgerätes (m)
w = Breite des Arbeitsgerätes (m)
n = Anzahl der Furchen

ist.

**14.** Verfahren nach einem der vorhergehenden Ansprüche, das die Bodenbearbeitung für eine oder mehrere weitere Bodenbearbeitungsperioden einschließt, bei denen die Bodenbearbeitung in Richtungen allgemein parallel zu denen der ersten und zweiten Perioden erfolgt, wobei die Anzahl der Perioden der Bodenbearbeitung äquivalent zu der Bodenbearbeitung einer vorgegebenen Landfläche ist, **dadurch gekennzeichnet, dass** das Verfahren weiterhin den Schritt der Abbildung und des Speicherns der über die vorgegebene Fläche auftretenden Bodenfestigkeitswerte in einem Speicher einschließt.

**15.** Verfahren nach einem der vorhergehenden Ansprüche, **dadurch gekennzeichnet, dass** die Bodenbearbeitungstiefe des Arbeitsgerätes (60) einstellbar ist und dass das Verfahren den weiteren Schritt der:

xii. Einstellung eines oder mehrerer Betriebsverhalten-Parameter des Fahrzeuges während der Bodenbearbeitung einschließt, wodurch die Aufrechterhaltung eines konstanten Wertes der Bodenbearbeitungstiefe ermöglicht und eine Betriebsverhalten-Charakteristik der Fahrzeug-/Arbeitsgeräte-Kombination optimiert wird.

**16.** Verfahren nach Anspruch 13 und irgendeinem darauf zurückbezogenen Anspruch, **dadurch gekennzeichnet, dass** der eine Betriebsverhalten-Parameter oder die mehreren Betriebsverhalten-Parameter aus einem Fahrzeuggetriebe-Übersetzungsverhältnis oder einer Fahrzeug-Leistungszufuhr-Geschwindigkeit ausgewählt sind.

**17.** Verfahren nach einem der vorhergehenden Ansprüche, **dadurch gekennzeichnet, dass** die Fahrzeug-/Arbeitsgeräte-Betriebsverhalten-Charakteristik aus der Arbeitsgeschwindigkeit oder dem Treibstoffverbrauch ausgewählt ist.

**18.** Verfahren nach einem der Ansprüche 15 - 17, **dadurch gekennzeichnet, dass** der Schritt der Einstellung der Breite des Arbeitsgerätes (60) in Abhängigkeit von dem mittleren Bodenfestigkeitswert die Teilschritte der:

xiii. Messung des Wertes der Betriebsverhalten-Charakteristik der Fahrzeug-/Arbeitsgeräte-Kombination;

des Vergleichens des gemessenen Wertes und eines Dauerzustands-Bezugsmodells der Betriebsverhalten-Charakteristik; und
der Einstellung der Arbeitsgeräte-Breite derart einschließt, dass irgendein Unterschied zwischen der Betriebsverhalten-Charakteristik und dem Dauerzustands-Bezugsmodells zu einem Minimum gemacht wird.

**19.** Verfahren nach Anspruch 18, **dadurch gekennzeichnet, dass** der Teilschritt des Einstellens der Arbeitsgeräte-Breite die weiteren Teilschritte der:

xiv. Einstellung der Arbeitsgeräte-Breite auf einen Wert, von dem vorausgesagt wird, dass er den Unterschied zwischen dem gemessenen Wert und dem Dauerzustands-Bezugsmodell zu einem Minimum macht,
xv. der weiteren Bodenbearbeitung mit dem Arbeitsgerät und der Messung eines weiteren Wertes der Betriebsverhalten-Charakteristik,
xvi. des Vergleichens des weiteren Betriebsverhalten-Charakteristik-Wertes und des Dauerzustands-Bezugsmodells,
xvii. erforderlichenfalls der weiteren Einstellung der Arbeitsgeräte-Breite zur weitgehenden Verringerung des Unterschiedes zwischen der Betriebsverhalten-Charakteristik und dem Dauerzustands-Bezugsmodell,
und erforderlichenfalls
xviii. des weiteren Wiederholens der Schritte xiv. bis xvii. zur weitgehenden Verringerung des Unterschiedes einschließt.

**20.** Verfahren nach Anspruch 19, das die weiteren Teilschritte der:

xix. Feststellung einer oder mehrerer Charakteristiken der Bodenkrume und

xx. Modifikation des Dauerzustands-Bezugsmodells in Abhängigkeit von der festgestellten Bodenkrumen-Charakteristik einschließt.

21. Verfahren nach einem der Ansprüche 15 bis 20, **dadurch gekennzeichnet, dass** die Arbeitsgeräte-Breite automatisch auf einen Wert eingestellt wird, von dem erwartet wird, dass er ein optimaler Wert für die vorherrschenden Werte der gemessenen Zugkraft und für die vorherrschende Einstellung eines variablen Betriebsverhalten-Parameters der Fahrzeug-/Arbeitsgeräte-Kombination ist.

22. Verfahren nach Anspruch 21, **dadurch gekennzeichnet, dass**, wenn die Arbeitsgeräte-Breite auf einen vorgegebenen Wert eingestellt ist, der von einem Fahrer der Fahrzeug-/Arbeitsgeräte-Kombination gewählt ist, das Verfahren durch die Einfügung der folgenden Schritte modifiziert wird:

xxi. Vergleichen einer ersten Betriebsverhalten-Charakteristik der Fahrzeug-/Arbeitsgeräte-Kombination bei auf den vorgegebenen Wert eingestellter Arbeitsgeräte-Breite mit einer weiteren Betriebsverhalten-Charakteristik der Fahrzeug-/Arbeitsgeräte-Kombination bei auf einen Wert eingestellter Arbeitsgeräte-Breite, von dem erwartet wird, dass er für die vorherrschenden Werte der gemessenen Zugkraft und für die vorherrschenden Einstellungen einer oder mehrerer veränderbarer Betriebsverhalten-Parameter der Fahrzeug-/Arbeitsgeräte-Kombination optimal ist, und, wenn die Differenz zwischen den ersten und weiteren Betriebsverhalten-Charakteristiken ein vorgegebenes Maximum übersteigt,

xxii. Übertragen eines Warnsignals an einen Fahrer der Fahrzeug-/Arbeitsgeräte-Kombination.

23. Verfahren nach einem der vorhergehend Ansprüche, **dadurch gekennzeichnet, dass** der Schritt i. der Bodenbearbeitung mit dem Arbeitsgerät das Pflügen einschließt.

24. Verfahren nach einem der vorhergehenden Ansprüche, **dadurch gekennzeichnet, dass** die ersten und/oder zweiten charakteristischen Bodenfestigkeitswerte durch Identifikation des am häufigsten auftretenden Bodenfestigkeitswertes aus einem Bereich von Werten gewonnen werden, die während einer der genannten Perioden der Bodenbearbeitung aufgetreten sind.

25. Verfahren nach Anspruch 24, **dadurch gekennzeichnet, dass**, wenn zwei verschiedene Bodenfestigkeitswerte mit gleicher Häufigkeit während einer der genannten Perioden auftreten, der Schritt der Auswahl eines charakteristischen Bodenfestigkeitswertes die Auswahl des größeren der zwei Werte einschließt.

26. Verfahren nach einem der Ansprüche 1 bis 23, **dadurch gekennzeichnet, dass** der Schritt der Auswahl eines charakteristischen Bodenfestigkeitswerts die Teilschritte der Mittelwertbildung der Bodenfestigkeitswerte, die während einer der Bodenbearbeitungsperioden auftreten, und die Verwendung des resultierenden mittleren Bodenfestigkeitswertes als den charakteristischen Bodenfestigkeitswert einschließt.

27. Vorrichtung zur Steuerung der Breite eines in seiner Breite einstellbaren Bodenbearbeitungs-Arbeitsgerätes (60), das betriebsmäßig mit einem kraftgetriebenen Fahrzeug (10) kombiniert ist, wobei die Vorrichtung Folgendes umfasst:

- einen oder mehrere Stellglieder zur Einstellung der Breite des Arbeitsgerätes (60);
- einen oder mehrere Sensoren zur Feststellung der Festigkeit des Bodens, der vorher von dem Arbeitsgerät bearbeitet wurde;
- und einen Prozessor (48) zur Steuerung des oder jedes Stellgliedes in Abhängigkeit von den festgestellten Bodenfestigkeitswerten; und

**dadurch gekennzeichnet, dass** der Prozessor (48) festgestellte Bodenfestigkeitswerte während einer Periode der Bodenbearbeitung speichert und am Ende dieser Periode die gespeicherten Werte analysiert, um einen charakteristischen Bodenfestigkeitswert zu gewinnen, der für die Bodenfestigkeitswerte charakteristisch ist, die während der Periode der Bodenbearbeitung auftreten, wobei der Prozessor nachfolgend das oder jedes Stellglied zur Einstellung der Breite des Arbeitsgerätes (60) in Abhängigkeit von dem charakteristischen Bodenfestigkeitswert steuert.

28. Vorrichtung nach Anspruch 27, **dadurch gekennzeichnet, dass** der Prozessor (48) Einrichtungen einschließt, um sicherzustellen, dass die genannte Breiteneinstellung des Arbeitsgerätes vor der nachfolgenden Bodenbearbeitung in allgemein der gleichen Richtung erfolgt wie die Richtung der Bodenbearbeitung während der ersten Bodenbearbeitungsperiode.

29. Vorrichtung nach Anspruch 27 oder 28, **dadurch gekennzeichnet, dass** der Prozessor (48) einen Speicher (48a) zum Speichern eines Histogramms der Bodenfestigkeitswerte und Einrichtungen zum Vergleich des am häufigsten auftretenden Bodenfestigkeitswertes mit dem Histogramm einschließt, wodurch der mittlere Bodenfestigkeitswert gewonnen wird, der der Periode der Bodenbearbeitung zugeordnet ist.

30. Vorrichtung nach Anspruch 29, **dadurch gekennzeichnet, dass** die Vorrichtung Einrichtungen zur Mittelwertbildung der während einer Bodenbearbeitungsperiode auftretenden Bodenfestigkeitswerte einschließt.

31. Bodenbearbeitungsvorrichtung nach einem der Ansprüche 27 bis 30, **dadurch gekennzeichnet, dass** die Vorrichtung einen oder mehrere Sensoren zur:

   - Feststellung der Breiteneinstellung des Bodenbearbeitungs-Arbeitsgerätes und zur Erzeugung eines diese anzeigenden Breitensignals und/oder

   - Feststellung der Tiefeneinstellung des Bodenbearbeitungs-Arbeitsgerätes und Erzeugung eines diese anzeigenden Tiefensignals einschließt, wobei die Signale als Eingangssigale dem Prozessor (48) zugeführt werden.

32. Vorrichtung nach Anspruch 31, **dadurch gekennzeichnet, dass** das Bodenbearbeitungs-Arbeitsgerät (60) umkehrbar ist, und dass die Vorrichtung einen oder mehrere Sensoren (90) zur Erzeugung eines Ausrichtungssignals einschließt, die die Ausrichtung des Arbeitsgerätes (60) anzeigt, wobei das Ausrichtungssignal als Eingangssignal dem Prozessor (48) zugeführt wird.

33. Vorrichtung nach Anspruch 31 und 32, **dadurch gekennzeichnet, dass** der Prozessor (48) die Breiten- und Tiefensignale in Analogformat und das Ausrichtungssignal in Digitalformat empfängt.

34. Vorrichtung nach einem der Ansprüche 27 bis 33, **dadurch gekennzeichnet, dass** der Prozessor eine Schnittstelle (48f) zur Kommunikation mit einem CAN zur Steuerung der Stellglieder einschließt, die den oder jeden Betriebsverhalten-Parameter der Fahrzeug-/Arbeitsgeräte-Kombination einstellen und/oder eine konstante Tiefeneinstellung des Arbeitsgerätes aufrechterhalten.

## Revendications

1. Méthode de contrôle d'un outil de labourage (60) à largeur réglable combiné fonctionnellement avec un véhicule motorisé (10), la méthode comprenant:

   i. le labourage avec l'outil (60) durant une première période; et

**caractérisée en ce que** la méthode comprend en outre les étapes suivantes:
   ii. obtention d'une pluralité de valeurs mesurées de la résistance du sol labouré au cours de la première période;
   iii. à la fin de la première période, l'analyse des valeurs mesurées de résistance du sol et de sélection d'une première valeur de résistance du sol caractéristique des valeurs de résistance de sol rencontrées au cours de la première période; et
   iv. l'ajustement de la largeur de l'outil (60), en fonction de la première valeur de résistance du sol, sur une largeur pour une utilisation durant une période ultérieure de labourage.

2. Méthode selon la Revendication 1, **caractérisée en ce que** pendant la période suivante, le labourage se déroule généralement dans la même direction que lors de la première période de labourage.

3. Méthode selon la Revendication 1 ou la Revendication 2 comprenant en outre les étapes suivantes:

   v. labourage avec l'outil (60) durant une seconde période;
   vi. obtention d'une pluralité de valeurs mesurées de la résistance du sol labouré au cours de la seconde période;
   vii. à la fin de la seconde période, l'analyse des valeurs mesurées de résistance du sol et de sélection d'une seconde valeur de résistance du sol caractéristique des valeurs de résistance de sol rencontrées au cours de la seconde période; et
   viii. l'ajustement de la largeur de l'outil (60), en fonction de la seconde valeur de résistance du sol, sur une largeur pour une utilisation durant une autre période ultérieure de labourage.

4. Méthode selon la Revendication 3, **caractérisée en ce que** pendant l'autre période suivante, le labourage se déroule dans la même direction générale que lors de la seconde période de labourage.

5. Méthode selon la Revendication 3 ou la Revendication 4, **caractérisée en ce que** le labourage pendant la première période se déroule dans la direction généralement opposée à celle du labourage pendant la seconde période.

6. Méthode de contrôle d'un outil de labourage (60) à largeur réglable combiné fonctionnellement avec un véhicule motorisé (10), la méthode comprenant:

   i. le labourage avec l'outil dans une première direction durant une première période;
   ii. l'obtention d'une pluralité de valeurs mesurées de la résistance du sol labouré au cours de la première période;

iii. le labourage ultérieur avec l'outil dans une seconde direction durant une seconde période;

iv. l'ajustement ultérieur de la largeur de l'outil en fonction d'une première valeur de résistance du sol caractéristique des valeurs de résistance du sol obtenues durant la première période;

v. le labourage ultérieur, durant une autre période, dans la première direction.

7. Méthode selon la Revendication 5 ou la Revendication 6, **caractérisée en ce que** la méthode comprend en outre les étapes:

ix. de retournement de l'outil de labourage (60) entre des périodes consécutives; et

x. d'encodage des valeurs de résistance du sol mesurées en fonction de l'orientation de l'outil de labourage (60).

8. Méthode selon l'une quelconque des revendications précédentes, **caractérisée en ce que** l'étape ou chaque étape d'obtention d'une pluralité de valeurs mesurées de résistance du sol comprend:

xi. la mesure périodique d'une variable de la combinaison véhicule/outil, la variable étant proportionnelle à la traction entre l'outil (60) et la véhicule (10).

9. Méthode selon la Revendication 8, **caractérisée en ce que** la fréquence de mesure est égale ou supérieure à 4 Hz.

10. Méthode selon la Revendication 8 ou la Revendication 9, **caractérisée en ce que** les valeurs mesurées de la variable sont converties en valeurs de résistance du sol et enregistrées dans un moyen de mémorisation (48a) tel qu'un histogramme.

11. Méthode selon la Revendication 10, **caractérisée en ce que** les valeurs de résistance du sol sont arrondies à 5 kNm$^{-2}$ près.

12. Méthode selon la Revendication 10 ou la Revendication 11, **caractérisée en ce que** la variable mesurée comprend une mesure de la traction statique.

13. Méthode selon la Revendication 12, **caractérisée en ce que** la valeur mesurée de la variable est convertie à l'aide de la formule:

$$D = (C1 + C2.gs^2) .d.w.n.$$

dans laquelle:

D = traction (kN)
C1 = résistance du sol (kN/m$^2$)
C2 = coefficient de traction dynamique ([kN/m$^2$] /[km/h]$^2$)
gs = vitesse au sol de la combinaison véhicule/ outil (km/h)
d = profondeur de travail de l'outil (m)
w = largeur de l'outil (m)
n = nombre de sillons

14. Méthode selon l'une quelconque des revendications précédentes, comprenant le labourage durant une ou plusieurs autres périodes de labourage pendant lesquelles le labourage se déroule dans des directions généralement parallèles à celle des première et seconde périodes, le nombre de périodes de labourage étant équivalent au labourage d'une zone prédéterminée de terrain, **caractérisée en ce que** la méthode comprend en outre l'étape de cartographie et d'enregistrement, dans une mémoire, des valeurs de résistance du sol apparaissant dans la zone prédéterminée.

15. Méthode selon l'une quelconque des revendications précédentes, **caractérisée en ce que** la profondeur de labourage de l'outil (60) est réglable, la méthode comprenant l'étape suivante:

xii. d'ajustement d'un ou de plusieurs paramètres de performances du véhicule pendant le labourage, de manière à permettre de maintenir une valeur constante de la profondeur de labourage et d'optimiser une caractéristique de performances de la combinaison véhicule/outil.

16. Méthode selon la Revendication 13 et une quelconque revendication s'y rapportant, **caractérisée en ce que** le ou les plusieurs paramètres de performances sont sélectionnés parmi un rapport de transmission du véhicule et un régime de motorisation du véhicule.

17. Méthode selon l'une quelconque des revendications précédentes, **caractérisée en ce que** la caractéristique de performances du véhicule/outil est sélectionnée parmi la productivité ou la consommation de carburant.

18. Méthode selon l'une quelconque des Revendications 15 à 17, **caractérisée en ce que** l'étape d'ajustement de la largeur de l'outil (60) en fonction de la valeur moyenne de résistance du sol comprend les sous-étapes:

xiii. de mesure de la valeur de la caractéristique de performances de la combinaison véhicule/ outil;

de comparaison de ladite valeur mesurée et d'un modèle de référence en régime permanent de la caractéristique de performances; et d'ajustement de la largeur de l'outil afin de minimiser toute différence entre ladite caractéristique de performances et le modèle de référence en régime permanent.

19. Méthode selon la Revendication 18, **caractérisée en ce que** la sous-étape d'ajustement de la largeur de l'outil comprend les sous-étapes supplémentaires:

xiv. d'ajustement de la largeur de l'outil sur une valeur prédite afin de minimiser la différence entre la valeur mesurée et le modèle de référence en régime permanent;
xv. de labourage supplémentaire avec l'outil et de mesure d'une valeur supplémentaire de ladite caractéristique de performances;
xvi. de comparaison de la valeur supplémentaire de caractéristique de performances et du modèle de référence en régime permanent;
xvii. au besoin, d'ajustement supplémentaire de la largeur de l'outil pour minimiser la différence entre la caractéristique de performances et le modèle de référence en régime permanent; et au besoin,
xviii. la répétition supplémentaire des étapes xiv. à xvii. pour minimiser ladite différence

20. Méthode selon la Revendication 19 comprenant les sous-étapes supplémentaires de:

xix. la détection d'une ou de plusieurs caractéristiques de labourage; et
xx. la modification du modèle de référence en régime permanent en fonction desdites caractéristiques détectées de labourage.

21. Méthode selon l'une quelconque des Revendications 15 à 20, **caractérisée en ce que** la largeur de l'outil est ajustée automatiquement sur une valeur prévue être une valeur optimale pour les valeurs réelles de la traction mesurée et pour le réglage réel d'un paramètre variable de performances de la combinaison véhicule/outil.

22. Méthode selon la Revendication 21, **caractérisée en ce que** lorsque la largeur de l'outil est ajustée sur une valeur prédéterminée choisie par un opérateur de la combinaison véhicule/outil, la méthode est modifiée en y incluant les étapes:

xxi. de comparaison d'une première caractéristique de performances de la combinaison véhicule/outil lorsque la largeur de l'outil est ajustée sur la valeur prédéterminée par rapport à une autre caractéristique de performances de la combinaison véhicule/outil lorsque la largeur de l'outil est ajustée sur une valeur prévue être optimale pour les valeurs réelles de l'un ou de plusieurs paramètres variables de performances de la combinaison véhicule/outil et, si la différence entre la première et l'autre caractéristiques de performances excède un maximum prédéterminé;
xxii. de transmission d'un signal d'avertissement à l'opérateur de la combinaison véhicule/outil.

23. Méthode selon l'une quelconque des revendications précédentes, **caractérisée en ce que** l'étape i. de labourage avec l'outil comprend le charruage.

24. Méthode selon l'une quelconque des revendications précédentes, **caractérisée en ce que** la première et/ou la seconde valeurs caractéristiques de résistance du sol sont obtenues en identifiant la valeur de résistance du sol la plus fréquente parmi une plage de valeurs rencontrées pendant ladite période de labourage.

25. Méthode selon la Revendication 24, **caractérisée en ce que**, lorsque deux valeurs de résistance du sol sont rencontrées avec une même fréquence durant une dite période, l'étape de sélection d'une valeur caractéristique de résistance du sol comprend la sélection de la plus grande des deux dites valeurs.

26. Méthode selon l'une quelconque des Revendications 1 à 23, **caractérisée en ce que** l'étape de sélection d'une valeur caractéristique de résistance du sol comprend les sous-étapes de calcul de la moyenne des valeurs de résistance du sol rencontrées pendant une dite période de labourage; et d'utilisation de la valeur résultante de résistance du sol en tant que valeur caractéristique de résistance du sol.

27. Appareil de contrôle de la largeur d'un outil de labourage (60) à largeur réglable combiné fonctionnellement à un véhicule motorisé (10), l'appareil comprenant:

- un ou plusieurs actionneurs destinés à ajuster la largeur de l'outil (60);
- un ou plusieurs capteurs destinés à détecter la résistance du sol préalablement labouré par l'outil;
- et un processeur (48) destiné à contrôler le ou plusieurs actionneurs en fonction des valeurs détectées de résistance du sol; et

**caractérisé en ce que** le processeur (48) enregistre des valeurs détectées de résistance du sol durant une période de labourage et à la fin de ladite période, calcule la moyenne des valeurs enregistrées pour obtenir une valeur moyenne de résistance du sol, le processeur contrôlant ensuite le ou chaque actionneur afin d'ajuster la largeur de l'outil (60) en fonction de la valeur moyenne de résistance du sol.

**28.** Appareil selon la Revendication 27, **caractérisé en ce que** le processeur (48) comprend des moyens destinés à s'assurer qu'un tel ajustement de largeur survient avant le labourage suivant dans généralement la même direction que celle de labourage durant la première période de labourage.

**29.** Appareil selon la Revendication 27 ou la Revendication 28, **caractérisé en ce que** le processeur (48) comprend une mémoire (48a) destinée à enregistrer un histogramme de valeurs de résistance du sol, et des moyens de comparaison de la valeur de résistance du sol la plus fréquente par rapport audit histogramme de manière à obtenir la valeur moyenne de résistance du sol associée avec la période de labourage.

**30.** Appareil selon la Revendication 29, **caractérisé en ce que** l'appareil comprend des moyens destinés à calculer la moyenne des valeurs de résistance du sol rencontrées pendant une dite période de labourage.

**31.** Appareil de labourage selon l'une quelconque des Revendications 27 à 30, **caractérisé en ce que** l'appareil comprend un ou plusieurs capteurs pour:

- détecter l'ajustement de largeur de l'outil de labourage et de génération d'un signal indicateur de cette largeur; et/ou
- détecter le réglage de profondeur de l'outil de labourage et de génération d'un signal de profondeur indicateur de cette profondeur, lesdits signaux étant introduits dans le processeur (48).

**32.** Appareil selon la Revendication 31, **caractérisé en ce que** l'outil de labourage (60) est réversible et l'appareil comprend un ou plusieurs capteurs (90) destinés à générer un signal d'orientation indicateur de l'orientation de l'outil (60), le signal d'orientation étant introduit dans le processeur (48).

**33.** Appareil selon les Revendications 31 et 32, **caractérisé en ce que** le processeur (48) reçoit les signaux de largeur et de profondeur sous forme analogique et le signal d'orientation sous forme numérique.

**34.** Appareil selon l'une quelconque des Revendications 27 à 33, **caractérisé en ce que** le processeur comprend une interface (48f) pour communiquer avec un réseau CAN afin de contrôler les actionneurs ajustant le ou chaque paramètre de performances de la combinaison véhicule/outil; et/ou maintenant un réglage de profondeur constante de l'outil.

*Fig. 1*

From "Disengaging"
Mode

140 —

141 —

Search soil strength histogram acquired during last
pass in the direction *about to be ploughed:*
Identify most frequently occuring soil strength range

142 —

Run Prediction Algorithm
. For most frequent soil strength
. Over potential transmission gear range
. Over available implement working width range
RESULT:- Set of performance curves
(workrate vs. impl. width in each gear)
In Memory

*Fig. 2*

143 —

Search Performance Curves for:-
. Absolute best implement working width
(within physically available range)
. Best implement working width within
operator-set limits (if different)

150

No

Is "Absolute Best" working width
within operator-set limits?

No        Yes

144

No        Is loss of workrate > ........%
if "Best implement width within
operator-set limits" is used?

Yes

152

Warn operator of size of potential
performance loss and give option
to override operator-set working
width limits

153

Operator-set width
limits overridden?

Yes

No

Wait for plough
to turn over      — 146

146 —      Wait for plough
to turn over

147

Plough
turnover?

No        No        Plough
turnover?

147

148

Yes

151

Set plough working width
to "Best within operator-set
limits" value

Yes

Set plough working width
to "Absolute Best" value

Go to
"Idle" Mode —

149

Solenoid
valve — 94

Manual
control
box — 93
(Removable)

92

Tractor/implement
CAN network to CCU

| CAN I/F 48f | Solenoid drivers 48e | Digital inputs 48b | Analogue inputs 48c |
|---|---|---|---|
| Voltage regulator 48d | Microcomputer Memory for histogram | 48a | |

Furrow
width transducer
(LVDT)

12V nominal
power from tractor

PLOUGH CONTROL UNIT

48

Side
switches
90

Ultrasonic
depth
transducer
91

*Fig. 3*

EP 0 838 139 B1